# EUROPÄISCHE PATENTSCHRIFT

(11) **EP 1 394 000 B1**
(45) Veröffentlichungstag und Bekanntmachung des Hinweises auf die Patenterteilung: **25.03.2009**
(21) Anmeldenummer: 03018444.4
(22) Anmeldetag: 14.08.2003
(51) Int. Cl.: B60R 21/34, B62D 25/10

(54) **Verfahren zur Montage einer Scharnieranordnung einer Frontklappe**
Assembly method of a front bonnet hinge device
Procédé de montage d'un dispositif de charnière d'un capot avant

(30) Priorität: 29.08.2002 DE 10239882
(43) Veröffentlichungstag der Anmeldung: 03.03.2004
(73) Patentinhaber: Bayerische Motoren Werke Aktiengesellschaft, 80809 München (DE)
(72) Erfinder: Köstler, Ulrich, 85241 Hebertshausen (DE); Dirndorfer, Albin, Dr., 85375 Neufahrn (DE); Tietel, Andreas, 81375 München (DE); Knechtel, Marcus, 85774 Unterföhring (DE); Theil, Christoph, 80637 München (DE)

(56) Entgegenhaltungen:
- US-B1- 6 439 330

## Beschreibung

Die Erfindung betrifft ein Verfahren zur Montage einer Anordnung einer Frontklappe an einem Fahrzeug.

Um bei einer Kollision eines Fußgängers oder Radfahrers mit einem Kraftfahrzeug das Ausmaß von Verletzungen, insbesondere im Brust- und Kopfbereich, zu minimieren, ist es allgemein bekannt, die Frontklappe im hinteren oder im vorderen und hinteren Bereich anzuheben. Hierdurch wird ein so großer Abstand der Frontklappe zu einer steifen Unterstruktur des Fahrzeugs (Motor, Federbeinaufnahmen, etc.) erreicht, dass ein ausreichender Deformationsweg zur Verfügung steht, um den Aufprall des Fußgängers oder Radfahrers auf ein verträgliches Maß zu verzögern.

US 643 93 30 B1 beschreit ein Verfahren zur Montage einer Anordnung einer Frontklappe gemäß den Oberbegriff des Anspruchs 1.

Aufgabe der Erfindung ist es, ein Verfahren zur einfachen Montage einer solchen Anordnung einer Frontklappe zu schaffen.

Diese Aufgabe wird durch das Verfahren gemäß der Merkmale des Patentanspruchs 1 gelöst.

Erfindungsgemäß weist eine Anordnung einer Frontklappe an einem Fahrzeug zumindest ein Scharnier auf, um das die Frontklappe zum normalen Öffnen und Schließen verschwenkbar ist. Das Scharnier ist mit einem Scharnieroberteil an der Frontklappe und mit einem Scharnierunterteil an der Karosserie des Fahrzeugs angebracht. Wenn eine Sensoreinrichtung eine Kollision des Fahrzeugs mit einem Fußgänger oder Radfahrer detektiert, wird die Frontklappe gegenüber der geschlossenen Stellung zusammen mit dem Scharnier durch eine Anhebevorrichtung angehoben. Zur Montage dieser Anordnung einer Frontklappe werden folgende Schritte durchgeführt: Zunächst wird das Scharnier montiert. Dazu wird das Scharnierunterteil mit zumindest einer Schraube an der Karosserie angeschraubt und das Scharnieroberteil an der Frontklappe befestigt. Anschließend wird die Anhebevorrichtung an der Karosserie einerseits und an dem Scharnierunterteil andererseits befestigt. Zum Schluss werden die zumindest eine Schraube, mit der das Scharnierunterteil an der Karosserie angeschraubt ist, wieder herausgeschraubt. Anstelle der zumindest einen Schraube ist auch jede andere wieder lösbare Verbindungsart denkbar.

Es wird also zunächst die Frontklappe so an der Karosserie angeschraubt, als ob kein Fußgängeraufprallschutz vorgesehen ist. Dadurch kann die Frontklappe ganz normal justiert werden. Erst danach wird die Anhebevorrichtung montiert, und die Schrauben werden wieder herausgeschraubt. Damit kann je nach Bedarf ein Fahrzeug mit und ohne Fußgängeraufprallschutz gebaut werden, ohne dass unterschiedliche Bauteile zum Einsatz kommen. Bei einem Fahrzeug ohne Fußgängeraufprallschutz entfällt einfach die Anhebevorrichtung und das Scharnierunterteil bleibt mit der Karosserie verschraubt. Auch kann der Fußgängeraufprallschutz jederzeit nachgerüstet werden.

Üblicherweise wird die Frontklappe mit dem Scharnier vor dem Lackierprozess an der Karosserie angeschraubt, damit die Frontklappe und das Scharnier mitlackiert werden. Die Anhebevorrichtung aber ist ein relativ sensibles Bauteil, das durch die Temparaturen beim Lackierprozess und / oder den Lack selber in Mitleidenschaft gezogen werden könnte. Durch das erfindungsgemäße Verfahren kann die Frontklappe vor dem Lackierprozess, und die Anhebevorrichtung nach dem Lackierprozess montiert werden.

In der Werkstatt kann zur Durchführung von Reparaturen das Scharnierunterteil vorübergehend auch wieder mit der Karosserie verschraubt werden, um eine Fehlauslösung der Anhebevorrichtung während der Reparatur zu verhindern. Auch nach einer Kollision, bei der die Anhebevorrichtung ausgelöst wurde, kann zur Weiterfahrt das Scharnierunterteil wieder mit der Karosserie verschraubt werden. Dadurch kann das Fahrzeug problemlos weiterhin genutzt werden, obwohl die Anhebevorrichtung unter Umständen erst wieder funktionsfähig gemacht werden muss.

Weitere vorteilhafte Ausgestaltungen sind Gegenstand von Unteransprüchen.

In der Zeichnung ist ein Ausführungsbeispiel der Erfindung dargestellt, anhand dessen die Erfindung im folgenden näher beschrieben wird. Die Figuren zeigen in schematischer Darstellungsweise:
- **Fig.** 1: eine perspektivische Ansicht eines Scharniers einer Frontklappe,
- **Fig.** 2: eine weitere perspektivische Ansicht des Scharniers von **Fig.** 1,
- **Fig.** 3: eine Seitenansicht des Scharniers von **Fig.** 1 und
- **Fig.** 4: einen Schnitt durch das Scharnier von **Fig.** 3 entlang der Schnittlinie IV - IV.

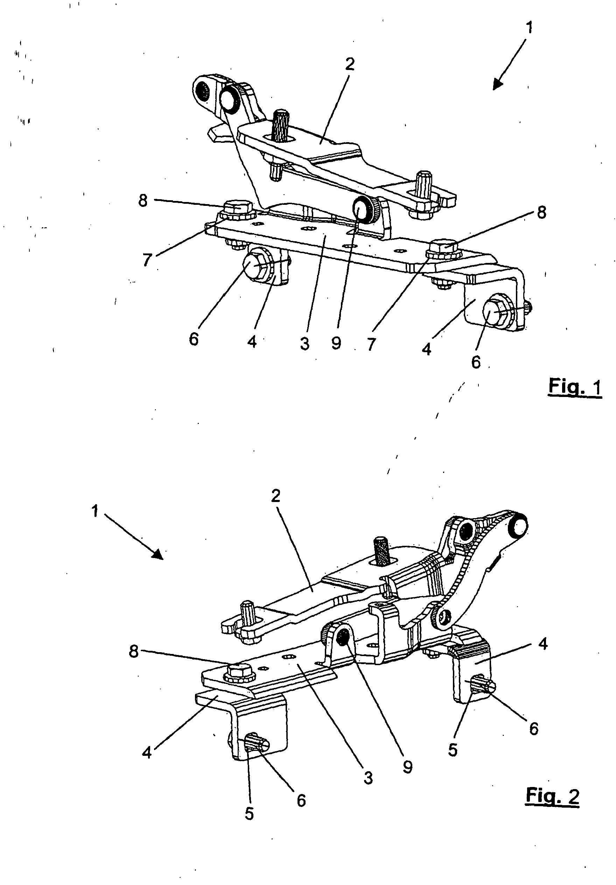

**Fig.** 1, **Fig.** 2 und **Fig.** 3 zeigen aus unterschiedlichen Blickwinkeln jeweils ein Viergelenkscharnier 1 einer hier nicht dargestellten Frontklappe eines Personenkraftwagens. Um das - in Fahrtrichtung gesehen - hinten liegende Viergelenkscharnier 1 ist die Frontklappe zum normalen Öffnen und Schließen schwenkbar. Normalerweise wird auf jeder Seite der Frontklappe jeweils ein solches Viergelenkscharnier 1 angeordnet sein. Das Viergelenkscharnier 1 ist über ein Scharnieroberteil 2 an der Frontklappe befestigt und über ein Scharnierunterteil 3 mit zwei Zusatzwinkeln 4 verschraubt, die mit der Karosserie des Personenkraftwagens verbunden sind.

Zur Montage wird vorab das Viergelenkscharnier 1 mit den Zusatzwinkeln 4 zu einer Vormontageeinheit verschraubt. Danach wird die Vormontageeinheit über das Scharnieroberteil 2 mit der Frontklappe verbunden und über die Zusatzwinkel 4 mit der Karosserie verschraubt. Zur genauen Justage der Frontklappe und zum Ausgleich der Toleranzen der Karosserie und der Frontklappe weisen die Anschraublöcher 5 der Zusatzwinkel 4 einen größeren Durchmesser als die Schrauben 6 auf, mit denen die Zusatzwinkel 4 an der Karosserie verschraubt sind, oder sind als Langlöcher ausgeführt. Auch die Anschraublöcher 7 im Scharnierunterteil 3 weisen aus diesem Grund einen größeren Durchmesser als die Schrauben 8 auf, mit denen das Scharnierunterteil 3 an den Zusatzwinkeln 4 verschraubt ist, oder sind als Langlöcher ausgeführt.

Nach der Justage der Frontklappe wird nun die Karosserie zusammen mit der Frontklappe und dem Viergelenkscharnier 1 lackiert. Erst nach der Lackierung wird eine nicht dargestellte Anhebevorrichtung am Scharnierunterteil 1 am Gelenk 9 mitangelenkt und an der Karosserie angelenkt. Die Anhebevorrichtung würde während des Lackierprozesses ansonsten möglicherweise beschädigt werden. Sie weist eine bestimmte Länge auf, die sich schlagartig vergrößern kann, wenn von einer Sensoreinrichtung eine Kollision des Personenkraftwagens mit einem Fußgänger oder Radfahrer detektiert wird. Derartige Anhebevorrichtungen sind bereits mannigfach aus dem Stand der Technik bekannt: Zum Schluss werden die Schrauben 8 aus den Zusatzwinkeln 4 herausgeschraubt.

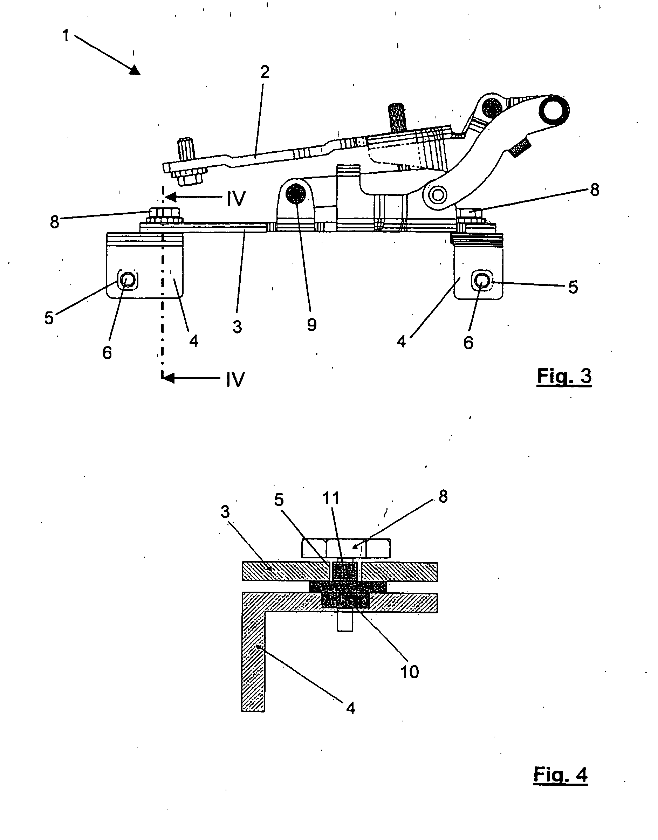

Die Schrauben 8 sind - wie in **Fig.** 4 erkennbar - nicht direkt in die Zusatzwinkel 4 hineingeschraubt, sondern jeweils in eine Bundbuchse 10, die in den jeweiligen Zusatzwinkel 4 eingepresst ist. Die Bundbuchse 10 weist zusätzlich einen nach oben stehenden Steg 11 auf, der in das Anschraubloch 7 des Scharnierunterteils 3 hineinragt. Damit führt die Bundbuchse 10 das Scharnierunterteil 3 zumindest bei geöffneter und geschlossener Frontklappe formschlüssig in Fahrzeuglängs- und - querrichtung, auch wenn die Schrauben 8 wieder herausgeschraubt sind.

Durch dieses Montageverfahren kann die Frontklappe vollständig vor dem Lackierprozess justiert werden, sodass die Zusatzwinkel 4 nach dem Lackieren nicht mehr in ihrer Lage relativ zur Karosserie verändert werden müssen. Dadurch kann eine Beschädigung des Lackes ausgeschlossen werden.

Wenn die Anhebevorrichtung ausgelöst wird, ist durch die Bundbuchsen 10 sichergestellt, dass das Scharnierunterteil 3 beim Anheben nicht seitlich die Karosserie streifen kann, sodass sich weder das Scharnierunterteil 3 verkeilen noch der Lack der Karosserie beschädigt werden kann.

Nach dem Auslösen der Anhebevorrichtung kann diese möglicherweise zunächst nicht mehr funktionsfähig sein, beispielsweise wenn sie pyrotechnisch angetrieben wird. Nach einer manuellen Reversierung der Anhebevorrichtung können dann die bei der Montage entfernten Schrauben 8 wieder montiert werden, bis eine Werkstatt aufgesucht wird, um die Anhebevorrichtung wieder funktionsfähig zu machen.

Beim normalen Öffnen und Schließen der Frontklappe werden alle im Viergelenkscharnier 1 auftretenden Kräfte über die Zusatzwinkel 4 direkt in die Karosserie eingeleitet. Die Anhebevorrichtung wird nur senkrecht zur Fahrzeuglängs- und -querrichtung mit Kräften beaufschlagt.

## Patentansprüche

1. Verfahren zur Montage einer Anordnung einer Frontklappe an einem Fahrzeug mit zumindest einem Scharnier **(1),** um das die Frontklappe zum normalen Öffnen und Schließen verschwenkbar ist, das mit einem Scharnieroberteil **(2)** an der Frontklappe und mit einem Scharnierunterteil **(3)** an der Karosserie des Fahrzeugs angebracht ist, und mit zumindest einer Anhebevorrichtung, durch die bei einer von einer Sensoreinrichtung detektierten Kollision des Fahrzeugs mit einem Fußgänger oder Radfahrer die Frontklappe zusammen mit dem Scharnier (1) gegenüber der geschlossenen Stellung angehoben wird, bestehend aus folgenden Schritten:
a. Montage des Scharniers **(1):** Anschrauben des Scharnierunterteils **(3)** mit zumindest einer Schraube **(8)** an der Karosserie und Befestigung des Scharnieroberteils **(2)** an der Frontklappe, sowie gegebenenfalls Einstellen des Scharniers **(1),**
b. Montage der Anhebevorrichtung: Befestigung der Anhebevorrichtung an der Karosserie einerseits und an dem Scharnierunterteil **(3)** andererseits, **dadurch gekennzeichnet** durch das
c. Herausschrauben der zumindest einen Schraube **(8),** mit denen das Scharnierunterteil **(3)** an der Karosserie angeschraubt ist.

2. Verfahren nach Anspruch 1, **dadurch gekennzeichnet, dass** nach dem Schritt a die Karosserie mit der Frontklappe und dem Scharnier **(1)** lackiert wird, bevor im Schritt b die Anhebevorrichtung montiert wird.

3. Verfahren nach Anspruch 1 oder 2, **dadurch gekennzeichnet, dass** das Scharnierunterteil **(3)** mit zumindest einem Zusatzwinkel **(4)** verschraubt ist, über den das Scharnierunterteil **(3)** an der Karosserie angebracht wird, und dass im Schritt c die Schrauben **(8)** zwischen dem Scharnierunterteil **(3)** und dem Zusatzwinkel **(4)** herausgeschraubt werden.

4. Verfahren nach einem der vorhergehenden Ansprüche, **dadurch gekennzeichnet, dass** das Scharnierunterteil **(3)** auch nach dem Lösen der zumindest einen Schraube **(8)** zumindest bei geöffneter und geschlossener Frontklappe formschlüssig zur Karosserie bzw. zum Zusatzwinkel **(4)** in Fahrzeuglängs- undquerrichtung geführt ist.

## Claims

1. A method of assembling a bonnet arrangement on a vehicle, comprising at least one hinge (1) for pivoting the bonnet for normal opening and closing, the hinge having a top part (2) connected to the bonnet and a bottom part (3) connected to the vehicle body, also comprising at least one lifting device whereby, in the event of a sensor detecting a collision between the vehicle and a pedestrian or cyclist, the bonnet and hinge (1) are raised above the closed position, the method having the following steps:
a. assembling the hinge (1): screwing the bottom part (3) to the body, using at least one screw (8), and fastening the top part (2) to the bonnet and adjusting the hinge (1) if required and
b. assembling the lifting device; fastening the lifting device to the body and to the bottom part (3) of the hinge,
**characterised by**
c. unscrewing the at least one screw (8) used for screwing the bottom part (3) to the body.

2. A method according to claim 1, **characterised in that** after step a) the body, including the bonnet and the hinge (1), is painted before the lifting device is assembled in step b).

3. A method according to claim 1 or claim 2, **characterised in that** the bottom part (3) of the hinge is screwed to at least one additional angle member (4) for attaching the bottom part (3) to the body, and in step c) the screws (8) between the bottom part (3) and the additional member (4) are unscrewed.

4. A method according to any of the preceding claims, **characterised in that** even after the at least one screw (8) has been loosened, the bottom part (3) of the hinge is guided in the longitudinal and transverse direction of the vehicle, positively relative to the body or to the additional member (4), at least when the bonnet is being opened or closed.

## Revendications

1. Procédé de montage d'un dispositif de capot avant d'un véhicule comprenant au moins une charnière (1) autour de laquelle le capot avant pivote pour son ouverture et sa fermeture normales, cette charnière étant reliée au capot avant par une partie supérieure (2) et à la carrosserie du véhicule par une partie inférieure (3), ainsi qu'au moins un dispositif de relevage qui, lors de la détection par une installation de capteur, d'une collision du véhicule avec un piéton ou un cycliste, relève le capot avant avec la charnière (1) par rapport à la position fermée, procédé comprenant les étapes suivantes :
a. montage de la charnière (1) : vissage de la partie inférieure (3) à l'aide d'au moins une vis (8) à la carrosserie et fixation de la partie supérieure (2) au capot avant et le cas échéant réglage de la charnière (1),
b. montage du dispositif de relevage : fixation d'une part du dispositif de relevage à la carrosserie et d'autre part à la partie inférieure (3) de la charnière,
**caractérisé par**
c. le dévissage d'au moins une vis (8) qui fixe la partie inférieure de la charnière (3) à la carrosserie.

2. Procédé selon la revendication 1,
**caractérisé en ce qu'**
après l'étape (a) on peint la carrosserie avec le capot avant et la charnière (1) avant de monter le dispositif de relevage selon l'étape (b).

3. Procédé selon la revendication 1 ou 2,
**caractérisé en ce qu'**
on visse la partie inférieure (3) de la charnière à au moins une cornière complémentaire (4) qui la fixe à la carrosserie, et
dans l'étape (c) on dévisse les vis (8) entre la partie inférieure (3) de la charnière et la cornière complémentaire (4).

4. Procédé selon les revendications précédentes,
**caractérisé en ce qu'**
après desserrage d'au moins une vis (8) lors de l'ouverture et la fermeture du capot avant, on guide la partie inférieure (3) de la charnière par une liaison par la forme par rapport à la carrosserie ou par rapport à la cornière complémentaire (4) dans la direction longitudinale et dans la direction transversale du véhicule.
